# EUROPEAN PATENT SPECIFICATION

(11) **EP 0 635 823 B1**
(45) Date of publication and mention of the grant of the patent: **22.09.1999**
(21) Application number: 94111194.0
(22) Date of filing: 18.07.1994
(51) Int. Cl.: G11B 5/53

(54) **Rotary transformer**
Rotierender Transformator
Transformateur rotatif

(30) Priority: 20.07.1993 JP 17891893
(43) Date of publication of application: 25.01.1995
(73) Proprietor: SHARP KABUSHIKI KAISHA, Osaka-shi, Osaka-fu 545-0013 (JP)
(72) Inventor: Yoshimoto, Akihito, Yamatotakada-shi, Nara-ken (JP); Ohtsuka, Hideshi, Yamatokoriyama-shi, Nara-ken (JP); Yoshida, Mitsunobu, Tenri-shi, Nara-ken (JP); Okuda, Tohru, Nara-shi, Nara-ken (JP)
(74) Representative: Müller, Frithjof E., Dipl.-Ing.

(56) References cited:
- EP-A- 0 393 582
- WO-A-88/06783
- FR-A- 2 492 567
- GB-A- 927 308
- US-A- 4 875 110
- PATENT ABSTRACTS OF JAPAN vol. 008 no. 139 (E-253) ,28 June 1984 & JP-A-59 048906 (NIHON FERRITE KK) 21 March 1984,

## Description

### BACKGROUND OF THE INVENTION

### Field of the Invention

The present invention relates to a rotary transformer in accordance with the precharacterizing part of claim 1. Such a rotary transformer is included in a rotary magnetic head device used in a magnetic recording/reproducing apparatus such as a video tape recorder, and more particularly, to a rotary transformer which can reduce crosstalk of a rotary magnetic head device also in a high frequency region. A rotary transformer of this type is, for example, known from Patent Abstracts of Japan, vol 8, no: 139, (E-253 ), 28.06.1984 corresponding to JP-A-59 048 906.

### Description of the Background Art

A performance of a magnetic recording/reproducing apparatus has recently been improved. Accordingly, a rotary transformer transferring a signal between a rotary magnetic head unit and a stationary signal processing unit tends to include multiple channels. It is desired that crosstalk of a record/reproduction signal between channels of such a rotary transformer is reduced even in a high frequency region.

Fig. 15 is a vertical sectional view of a conventional cylinder type rotary transformer. Fig. 16 is a vertical sectional view of a conventional disc type rotary transformer. Each of these rotary transformers includes a rotary magnetic member 1a and a stationary magnetic member 1b. Rotary magnetic member 1a is coupled to a rotary drum (not shown in Figs. 15 and 16) disposed thereabove, and stationary magnetic member 1b is fixed to a stationary drum (not shown in Figs. 15 and 16) disposed thereunder. A through hole 7 provided along the center axis of these two magnetic members 1a, 1b receives a rotary axis for a rotary drum.

Rotary magnetic member 1a and stationary magnetic member 1b have respective counter surfaces opposing to each other with a small space interposed therebetween. A plurality of rotary coil grooves 2a are formed on the counter surface of rotary magnetic member 1a, and a plurality of stationary coil grooves 2b are formed on the counter surface of stationary magnetic member 1b. Each of the plurality of rotary coil grooves 2a is opposed to a corresponding one of the plurality of stationary coil grooves 2b. Signal transfer rotary coils 3a and 4a are disposed in corresponding rotary coil groove 2a. Similarly, signal transfer stationary coils 3b and 4b are disposed in corresponding stationary coil groove 2b. Lead lines 3A and 4A from rotary coils 3a and 4a are drawn out upward through a wiring groove 8a provided in the direction orthogonal to coil groove 2a on the counter surface of rotary magnetic member 1a toward the rotary drum. Lead lines 3B and 4B from stationary coils 4a and 4b are drawn out downward through a wiring groove 8b provided in the direction orthogonal to stationary groove 2b on the counter surface of stationary magnetic member 1b toward the stationary signal processing unit.

In Figs. 15 and 16, the counter surface of rotary magnetic member 1a and the counter surface of stationary magnetic member 1b are opposed to each other with a small space S of several ten µm interposed therebetween. At the time of recording/reproducing, record/reproduction signals are transferred between rotary coil 3a and stationary coil 3b, and between rotary coil 4a and stationary coil 4b. When reproduction signal current flows from the rotary magnetic head to rotary coil 3a, for example, magnetic paths 5a, 5b as shown by dotted lines are formed, and current is induced in stationary coil 3b by the mutual dielectric reaction. As a result, a reproduction signal is to be transferred from rotary coil 3a to stationary coil 3b. Similarly, signal transfer from stationary coil 3b to rotary coil 3a, signal transfer from rotary coil 4a to stationary coil 4b, and signal transfer from stationary coil 4b to rotary coil 4a are carried out by the mutual dielectric reaction.

It should be noted that a short-circuited rotary coil ring 6a is disposed in rotary groove 2a between two signal transfer rotary coils 3a and 4a. Similarly, a short-circuited stationary coil ring 6b is disposed in stationary groove 2b between two signal transfer stationary coils 3b and 4b. These coil rings 6a and 6b are generally provided for reduction of crosstalk caused by magnetic field coupling. When signal current flows in signal transfer rotary coil 3a, for example, coil rings 6a, 6b produce eddy current to reduce magnetic flux in magnetic path 5b, thereby reducing crosstalk to signal transfer stationary coil 4b.

With increase in a performance of a magnetic recording/reproducing apparatus including a rotary magnetic head device, a rotary transformer is now desired which can transfer even a high frequency region of a record/reproduction signal with a high fidelity. Crosstalk in a high frequency region caused by electric field coupling can no longer be ignored.

Coil rings 6a, 6b as described above can reduce crosstalk caused by magnetic field coupling, but can not reduce crosstalk caused by electric field coupling.

A high-frequency loss caused by distributed capacity of coils in a rotary transformer has a large influence on crosstalk caused by electric field coupling. For example, when lead lines from a coil transferring a signal in a rotary transfer at the time of recording/reproducing approach and cross other coils simultaneously transferring signals, or when lead lines from a coil transferring a signal are disposed close to lead lines from other coils simultaneously transferring signals, undesired crosstalk may be caused by electric field coupling.

JP-A-2-214109 discloses an example of a rotary transformer which can reduce such crosstalk caused by electric field coupling. This rotary transformer, however, requires a through hole from a coil groove provided on a counter surface of a magnetic member to the surface opposite to the counter surface. Lead lines from a coil are drawn out to the surface opposite to the counter surface of the magnetic member through the through hole. More specifically, in the rotary transformer disclosed in JP-A-2-214109, a plurality of lead lines of a plurality of coils must be passed through a corresponding plurality of small through holes provided in the magnetic member, complicating the manufacturing process of the rotary transformer.

In JP-A-5-67529, a rotary transformer reducing crosstalk caused by electric coupling is disclosed. In the rotary transformer disclosed in JP-A-5-67529, a first conductive member is disposed close to a rotary magnetic member. The rotary magnetic member is electrically connected to the ground potential through the first conductive member. Similarly, a second conductive member is disposed close to a stationary magnetic member, which is electrically connected to the ground potential through the second conductive member. However, only a connection of the rotary magnetic member and the stationary magnetic member with the ground potential cannot sufficiently reduce crosstalk in a high frequency region.

In Patent Abstracts of Japan, vol 8, no: 139, (E-253), 28.06.1984 corresponding to JP-A-59 048 906 which is corresponding to the precharacterizing part of claim 1, crosstalk in the high frequency region is eliminated while lowering inductance by disposing short-circuiting rings in ring shaped grooves between each pair of coils in the opposing main surfaces of discoid ferrite magnetic cores. Lead wires of the coils are not specifically arranged so as to avoid crosstalk between the coils.

### SUMMARY OF THE INVENTION

In view of the above-described problems, one object of the present inventionis to provide a rotary transformer which can reduce not only crosstalk caused by magnetic field coupling but also crosstalk in a high frequency region caused by electric field coupling, and which can be easily fabricated.

The above object is, according to one essential aspect of the invention solved by a rotary transformer comprising a rotary magnetic member, a stationary magnetic member ,and two pairs of coils, said two magnetic members having respective counter surfaces opposing to each other with a small space interposed therebetween, wherein
each pair of coils is provided at the respective counter surface of the rotary magnetic member and the stationary magnetic member, and wherein
two pairs of coil groovesopposing to each other for receiving the two pairs of coils on said two counter surfaces are formed, and
wiring grooves are formed in the direction crossing said coil grooves so as to join said coil grooves, which is **characterized in that**
two pairs of lead lines extending from the two coils on said rotary magnetic member are drawn in the wiring grooves in directions away from both the two coils and then are routed to the other side opposite to the counter surface of said rotary magnetic member, without causing electric field coupling with any of the coils,
two pairs of lead lines extending from the two coils on said stationary magnetic member are drawn in the wiring grooves in directions away from both the two coils and then are routed to the other side opposite to the counter surface of said stationary magnetic member, without causing electric field coupling with any of the coils.

In the rotary transformer according to the present invention, crosstalk caused by electric field coupling can be reduced, because a pair of lead lines extending from one of the coils neither cross other coils simultaneously transferring signals in the wiring grooves, and nor approach lead lines from other coils simultaneously transferring signals. In the rotary transformer according to the present invention, the manufacturing process is not complicated, because it is not necessary to pass lead lines from the coils through a small through hole provided from the coil grooves on the counter surface of the magnetic member to the surface opposite to the counter surface.
The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a vertical sectional view of a rotary magnetic head device including a cylinder type rotary transformer according to one embodiment of the present invention.

Fig. 2 is an enlarged vertical sectional view of a cylinder type rotary transformer included in the rotary magnetic head device of Fig. 1.

Fig. 3 is a vertical sectional view of a disc type rotary transformer according to another embodiment of the present invention.

Fig. 4 is an elevational view showing a rotary magnetic member and a plurality of coils of the cylinder type rotary transformer shown in Fig. 2.

Fig. 5 is a vertical sectional view showing a stationary magnetic member and a plurality of coils of the cylinder type rotary transformer shown in Fig. 2.

Fig. 6 is a bottom view showing a rotary magnetic member and a plurality of coils of the disc type rotary transformer shown in Fig. 3.

Fig. 7 is a vertical sectional view showing a cylinder type rotary transformer according to still another embodiment of the present invention.

Fig. 8 is a vertical sectional view showing a disc type rotary transformer according to a further embodiment of the present invention.

Fig. 9 is a vertical sectional view showing a cylinder type rotary transformer according to a further embodiment of the present invention.

Fig. 10 is a vertical sectional view showing a disc type rotary transformer according to a further embodiment of the present invention.

Fig. 11 is a vertical sectional view showing a cylinder type rotary transformer according to a further embodiment of the present invention.

Fig. 12 is a vertical sectional view showing a disc type rotary transformer according to a further embodiment of the present invention.

Fig. 13 is a graph showing crosstalk characteristics in rotary transformers according to various embodiments of the present invention.

Fig. 14 is a graph showing an influence of a distance between a magnetic member and a conductive member on a crosstalk characteristic in the rotary transformer shown in Fig. 7.

Fig. 15 is a vertical sectional view showing a conventional cylinder type rotary transformer.

Fig. 16 is a vertical sectional view showing a conventional disc type rotary transformer.

### DESCRIPTION OF THE PREFERRED EMBODIMENTS

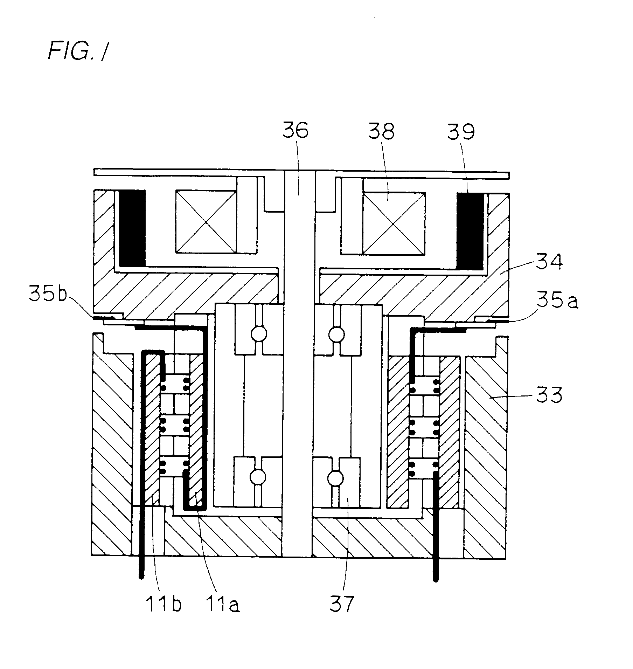

Fig. 1 shows a rotary magnetic head device including a cylinder type rotary transformer according to one embodiment of the present invention. As is seen from this vertical sectional view, the rotary magnetic head device includes a rotary magnetic member 11a and a stationary magnetic member 11b included in a rotary transformer, a stationary drum 33, a rotary drum 34, a pair of magnetic heads 35a and 35b, a stationary axis 36, a rotary bearing 37, a motor stator 38, and a motor rotor 39.

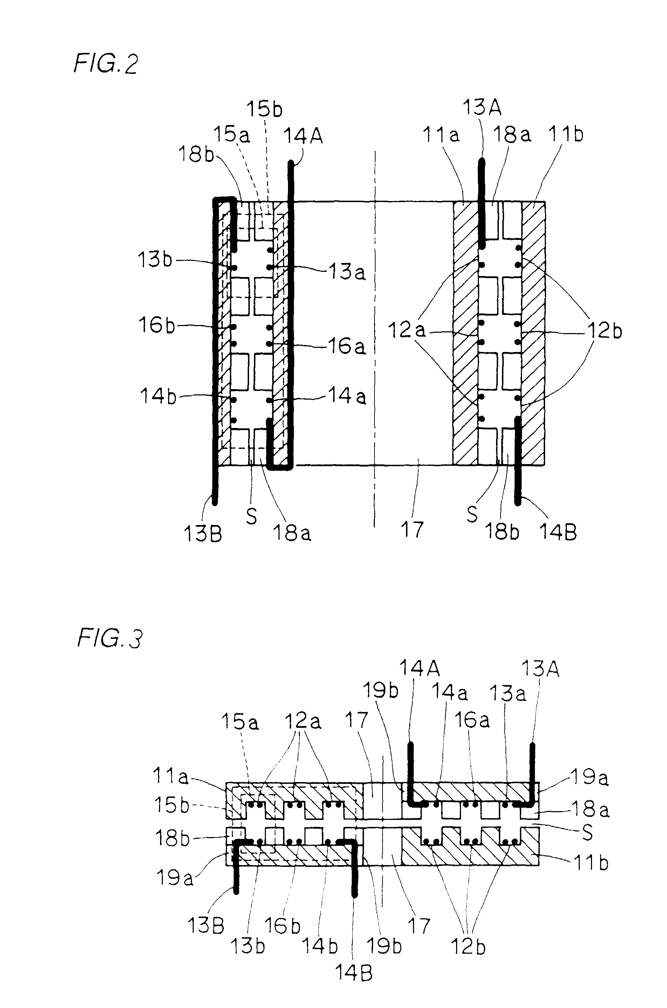

Fig. 2 shows an enlarged vertical section of the rotary transformer included in the rotary magnetic head device of Fig. 1. Fig. 3 shows a vertical section of a disc type rotary transformer according to another embodiment of the present invention. Each of rotary transformers shown in Figs. 2 and 3 includes rotary magnetic member 11a coupled to a rotary drum, and stationary magnetic member 11b attached to a stationary drum. A through hole 17 provided along the center axis of rotary magnetic member 11a and stationary magnetic member 11b receives a rotary axis for the rotary drum. Rotary magnetic member 11a and stationary magnetic member 11b have respective counter surfaces opposing to each other with a small space S interposed therebetween. A plurality of coil grooves 12a and 12b are formed on corresponding respective counter surfaces. A plurality of signal transfer rotary coils 13a and 14a are disposed in the plurality of rotary coil grooves 12a on rotary magnetic member 11a. Similarly, signal transfer stationary coils 3b and 4b are disposed in the plurality of stationary coil grooves 12b on stationary magnetic member 11b.

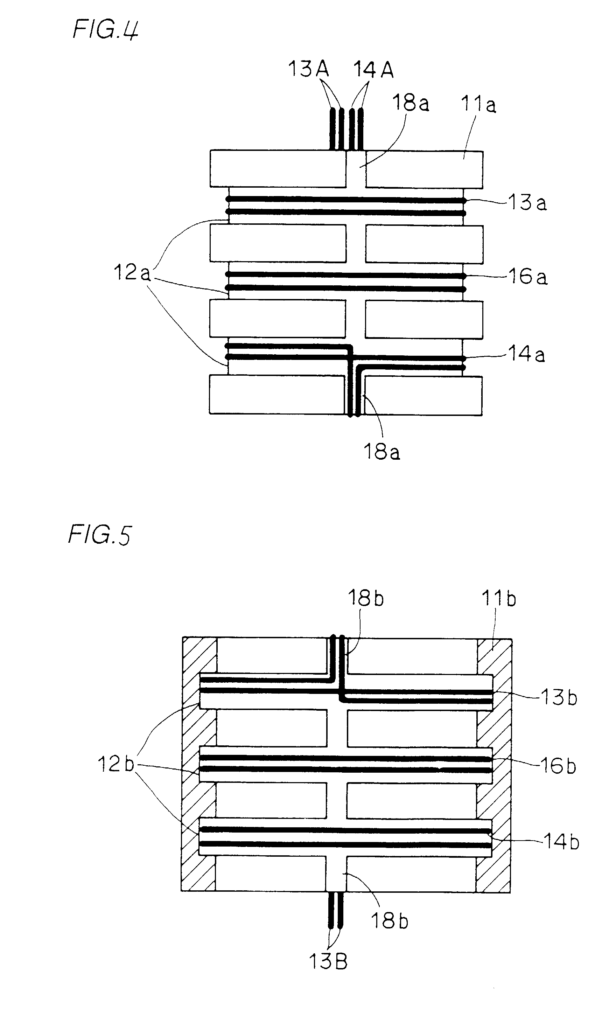

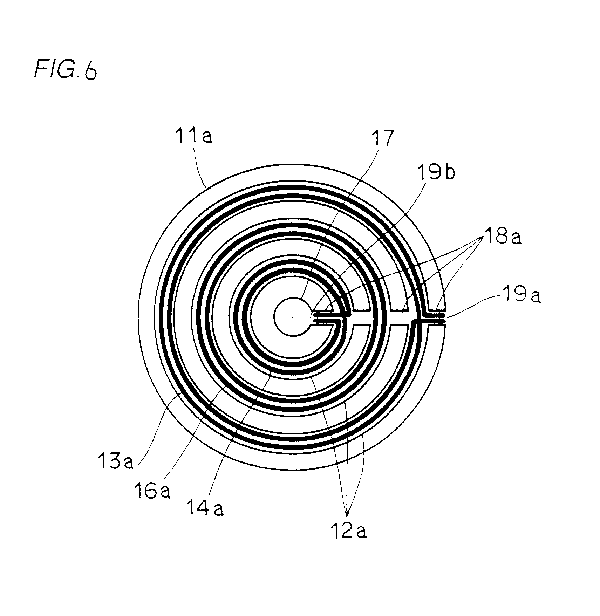

Figs. 4 and 5 are an elevational view showing the counter surface of rotary magnetic member 11a and a vertical sectional view showing the counter surface of stationary magnetic member 11b, respectively, in the cylinder type rotary transformer shown in Fig. 2. On the other hand, Fig. 6 is a bottom view showing the counter surface of rotary magnetic member 11a in the disc type rotary transformer shown in Fig. 3. By referring to Figs. 4 to 6, structures of the rotary transformers shown in Figs. 2 and 3 may clearly be understood.

In each of the rotary transformers shown in Figs. 2 and 3, the counter surface of rotary magnetic member 11a and the counter surface of stationary magnetic member 11b are opposed to each other with small space S of several ten µm interposed therebetween. At the time of recording/reproducing, record/reproduction signals are transferred between a rotary coil 13a and a stationary coil 13b, and between a rotary coil 14a and a stationary coil 14b. When reproduction signal current flows from the rotary magnetic head to rotary coil 13a, for example, magnetic paths 15a and 15b as indicated by dotted lines are formed. Current is induced in rotary coil 13b by the mutual dielectric reaction, causing a reproduction signal to be transferred from rotary coil 13a to stationary coil 13b. Similarly, signal transfer from stationary coil 13b to rotary coil 13a, signal transfer from rotary coil 14a to stationary coil 14b, and signal transfer from stationary coil 14b to rotary coil 14a are carried out by the mutual dielectric reaction between respective coils.

A short-circuited rotary coil ring 16a is disposed in rotary coil groove 12a between signal transfer rotary coils 13a and 14a. Similarly, a short-circuited stationary coil ring 16b is provided in stationary coil groove 12b provided between signal transfer stationary coils 13b and 14b. When signal current flows in rotary coil 13a, for example, eddy current produced in coil rings 16a and 16b reduces magnetic flux in magnetic path 15b, resulting in reduction of crosstalk to other signal transfer coils 14a and 14b caused by magnetic field coupling.

As is understood from Figs. 2 and 4, rotary magnetic member 11a in the cylinder type rotary transformer is provided with two wiring grooves 18a in the direction orthogonal to the plurality of rotary coil grooves 12a on the counter surface. These two wiring grooves 18a are disposed in symmetry with respect to the center axis of rotary magnetic member 11a. A pair of lead lines 13A from signal transfer rotary coil 13a on the upper side are drawn out upward through one wiring groove 18a toward the rotary magnetic head. On the other hand, a pair of lead lines 14A from rotary coil 14a on the lower side are once drawn out downward through the other wiring groove 18a, folded at a lower end portion of rotary magnetic member 11a, and then drawn out upward through a groove provided along the inner peripheral surface toward the rotary magnetic head.

Similarly, as is understood from Figs. 2 and 5, stationary magnetic member 11b of the cylinder type rotary transformer is provided with two wiring grooves 18b in the direction orthogonal to the plurality of stationary coil grooves 12b. These two wiring grooves 18b are disposed in symmetry with respect to the center axis of stationary magnetic member 11b. A pair of lead lines 14B from signal transfer stationary coil 14b on the lower side are drawn out downward through one wiring groove 18b toward the stationary signal processing unit. On the other hand, a pair of lead lines 13B from signal transfer stationary coil 13b on the upper side are once drawn out upward, folded at an upper end portion of stationary magnetic member 11b, and then drawn out downward through a groove provided along the outer peripheral surface toward the stationary signal processing unit.

Therefore, in the cylinder type rotary transformer illustrated in Figs. 3, 4 and 5, a pair of lead lines from any signal transfer coil neither cross any one of other coils simultaneously transferring signals in the wiring groove, nor approach any one of lead line pairs from other coils simultaneously transferring signals. Therefore, crosstalk in a high frequency region caused by electric field coupling based on distributed capacity of a coil can be reduced in such a cylinder type rotary transformer as shown in Fig. 2. In addition, in such a rotary transformer as shown in Fig. 2, since it is not necessary to provide a plurality of small holes in the magnetic member and to pass lead lines of coils therethrough, it is possible to prevent complication of the manufacturing process and to avoid increase in the manufacturing cost.

In such a disc type rotary transformer as illustrated in Figs. 3 and 6, a pair of lead lines 13A from signal transfer rotary coil 13a on the outer side are drawn out upward through wiring groove 18a and a notched grooved 19a provided along the outer peripheral end surface of rotary magnetic member 11a toward the rotary magnetic head. A pair of lead lines 14A from signal transfer rotary coil 14a on the inner side are drawn out upward through wiring groove 18a and a notched groove 19b provided along the inner peripheral end surface of rotary magnetic member 11a toward the rotary magnetic head.

Similarly, a pair of lead lines 13B from signal transfer stationary coil 13b on the outer side are drawn out downward through wiring groove 18b and notched groove 19a provided along the outer peripheral end surface of stationary magnetic member 11b toward the stationary signal processing unit. A pair of lead lines 14B from signal transfer stationary coil 14b on the inner side are drawn out downward through wiring groove 18b and notched groove 19b provided along the inner peripheral end surface of stationary magnetic member 11b toward the stationary signal processing unit.

Therefore, also in such a disc type rotary transformer as illustrated in Figs. 3 and 6, a pair of lead lines from one signal transfer coil neither cross any one of other coils simultaneously transferring signals in the wiring groove, nor approach any one of lead line pairs from other coils simultaneously transferring signals. Crosstalk in a high frequency region caused by electric field coupling due to distributed capacity of a coil can be reduced.

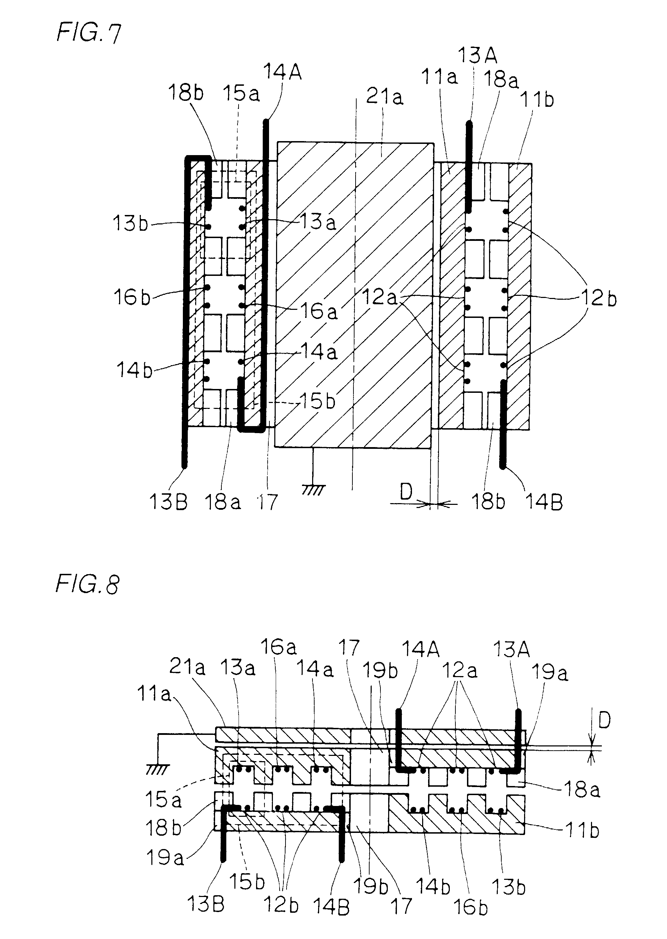

Figs. 7 and 8 show other embodiments similar to those of Figs. 2 and 3, respectively. However, in each of rotary transformer shown in Figs. 7 and 8, a rotary conductive member 21a is provided with a small distance D from the surface opposite to the counter surface of rotary magnetic member 11a. Rotary conductive member 21a is coupled to the rotary drum, and rotated with the rotary drum and rotary magnetic member 11a. Rotary conductive member 21a is also electrically connected to the ground potential through an earth-brush or the like in contact with the rotary drum. Stationary magnetic member 11b is fixed to the stationary drum, which is also electrically connected to the ground potential. In each of rotary transformers shown in Figs. 7 and 8, it is possible to stabilize the potential in the vicinity of magnetic members 11a and 11b. Therefore, crosstalk caused by electric field coupling can further be reduced. Although lead lines 14A are drawn out upward through the groove provided along the inner peripheral surface of rotary magnetic member 11a in Fig. 7, lead lines 14A may be drawn out through a groove provided along the outer peripheral surface of rotary conductive member 21b.

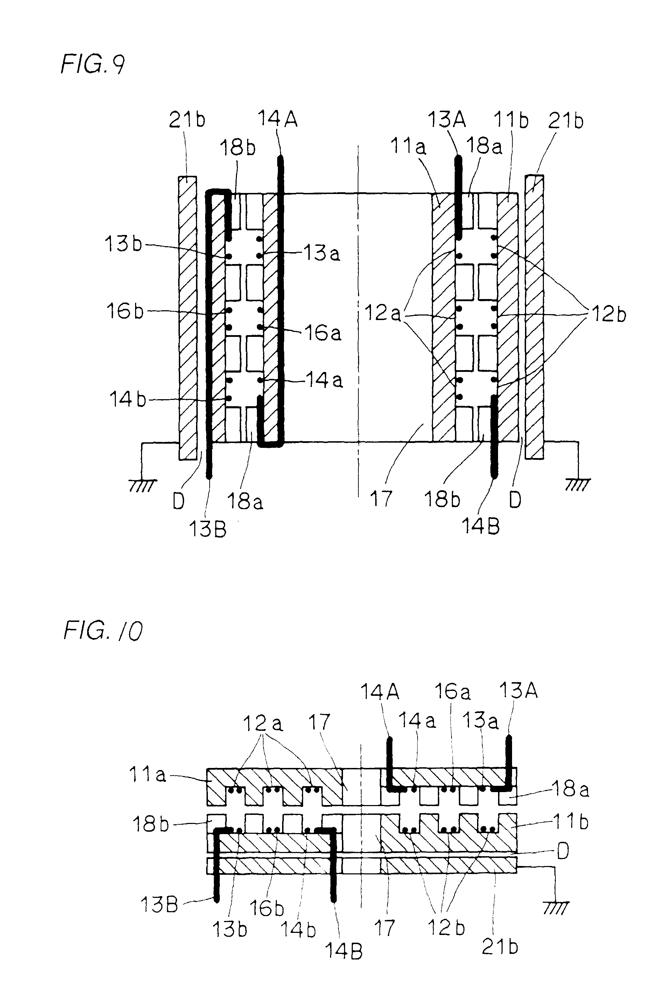

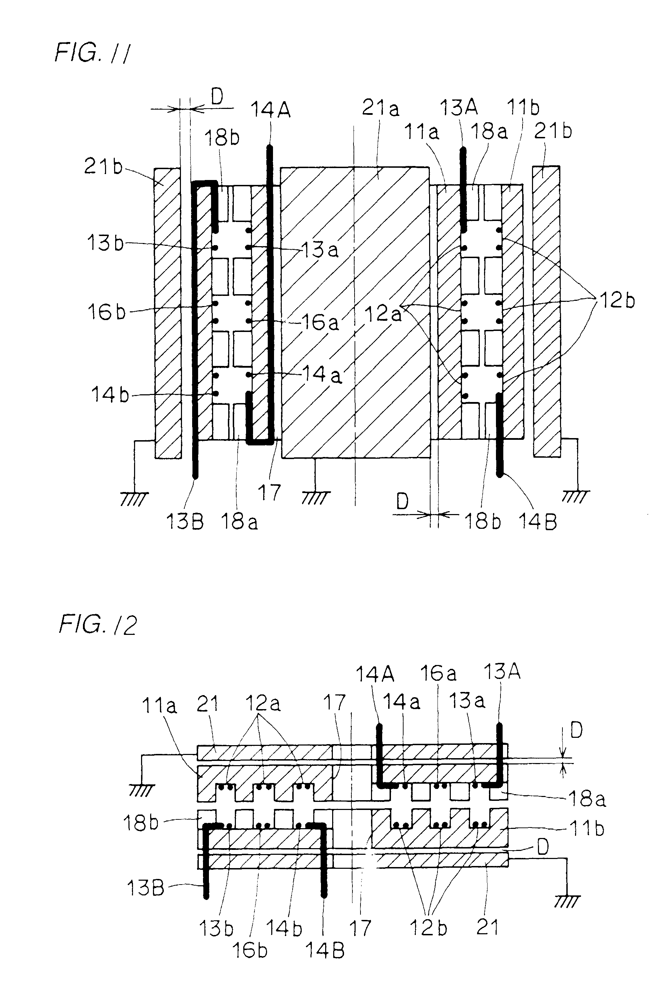

Figs. 9 and 10 show further embodiments similar to those of Figs. 2 and 3, respectively. However, in each of rotary transformers shown in Figs. 9 and 10, a stationary conductive member 21b is disposed with small distance D from the surface opposite to the counter surface of stationary magnetic member 11b. Stationary conductive member 21b is also connected to the ground potential. Stationary conductive member 21b can stabilize the potential in the vicinity of magnetic members 11a and 11b, thereby further reducing crosstalk caused by electric field coupling. Although lead lines 13B are drawn out downward through the groove provided along the outer peripheral surface of stationary magnetic member 11b in Fig. 9, lead lines 13B may be drawn out downward through a groove provided along the inner peripheral surface of stationary conductive member 21b.

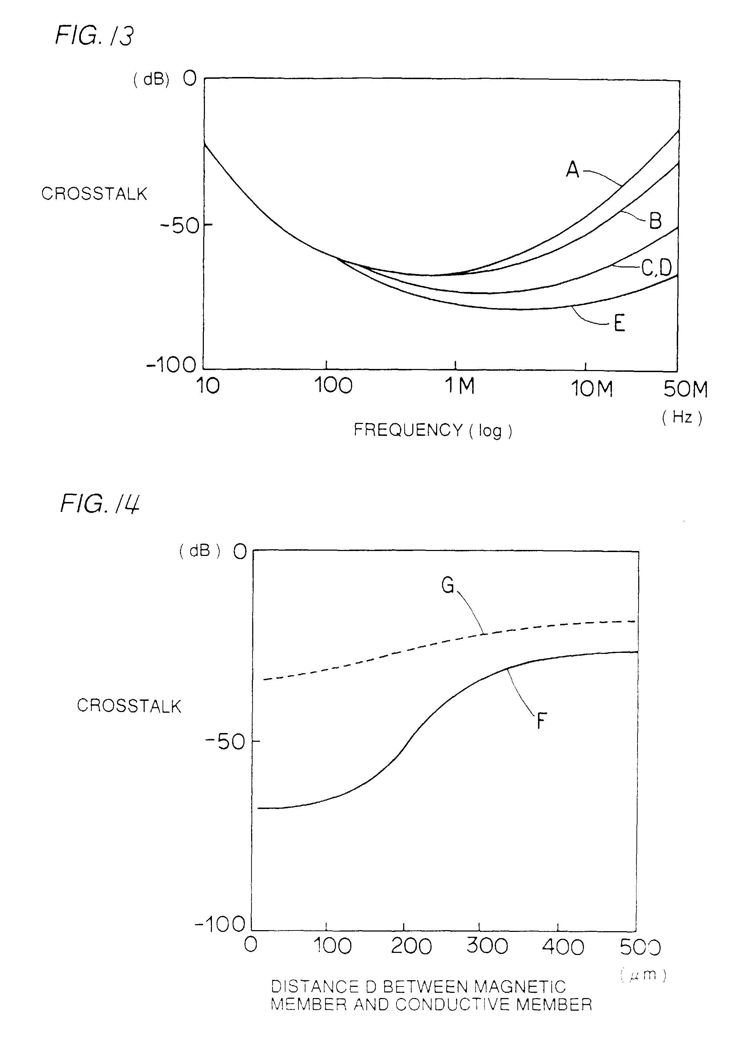

Figs. 11 and 12 show further embodiments similar to those of Figs. 2 and 3, respectively. In each of rotary transformers shown in Figs. 11 and 12, a rotary conductive member 21a is disposed with small distance D from the surface opposite to the counter surface of rotary magnetic member 11a. At the same time, stationary conductive member 21b is disposed with small distance D from the surface opposite to the counter surface of stationary magnetic member 11b. Both rotary conductive member 21a and stationary conductive member 21b are electrically connected to the ground potential. Therefore, it is ensured that the potential in the vicinity of rotary magnetic member 11a and stationary magnetic member 11b can be stabilized, and that crosstalk caused by electric field coupling can be reduced.

Fig. 13 is a graph showing crosstalk characteristics in rotary transformers according to various embodiments of the present invention. In this graph, the horizontal axis represents the signal frequency (Hz) with a logarithmic scale, and the vertical axis represents the crosstalk (dB). A curve A represents the crosstalk characteristic in the conventional rotary transformer of Fig. 15 for the sake of comparison. A curve B represents the crosstalk characteristic in the rotary transformer according to the embodiment of Fig. 1. Similarly, curves C, D and E represent crosstalk characteristics in the rotary transformers according to embodiments of Figs. 7, 9 and 10, respectively.

As is seen from the comparison of curves A and B, in the rotary transformer as shown in Fig. 2 in which lead lines from one signal transfer coil do not cross any one of other coils simultaneously transferring signals in the wiring groove, crosstalk in a high frequency region is reduced, as compared to the rotary transformer shown in Fig. 15 in which lead lines from one signal transfer coil cross any one of other coils simultaneously transferring signals in the wiring groove. As is seen from comparison of curves C, D and curve B, crosstalk in a high frequency region is further reduced by providing a conductive member connected to the ground potential in the vicinity of at least one of the rotary magnetic member and the stationary magnetic member in the rotary transformer of Fig. 2. As is seen from the comparison of curves C, D and curve E, crosstalk in a high frequency region can be further reduced by providing a conductive member connected to the ground potential in the vicinity of both of the rotary magnetic member and the stationary magnetic member of the rotary transformer. In any case, in the rotary transformers according to various embodiments of the present invention, it is understood that crosstalk can be considerably reduced in a high frequency region of at least 1MHz or more as compared to the case of the conventional rotary transformer.

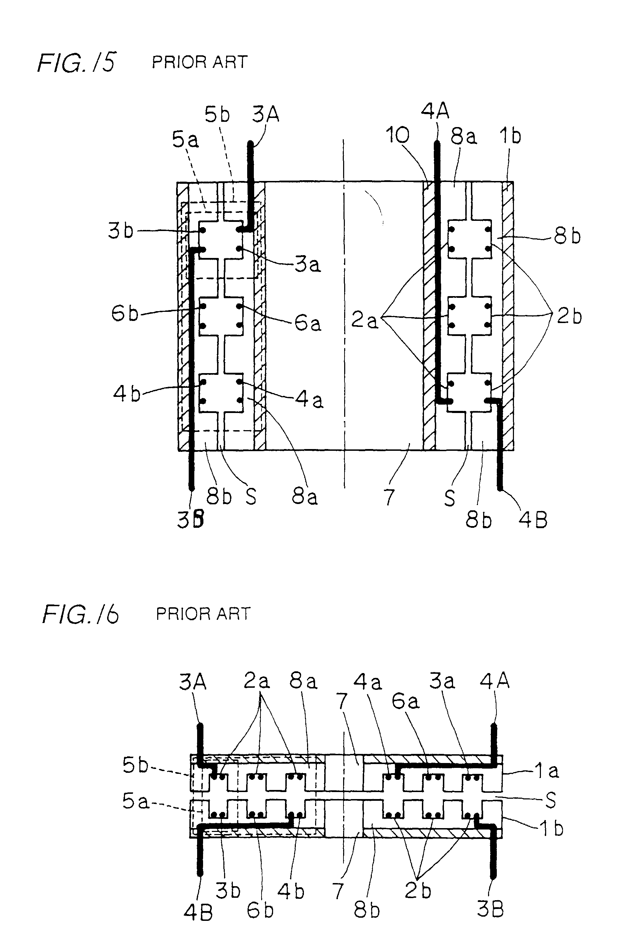

Fig. 14 shows the relationship between distance D from the magnetic member to the conductive member and crosstalk. In the graph of Fig. 14, the horizontal axis represents distance D (µm) between the magnetic member and the conductive member, and the vertical axis represents the crosstalk (dB). A curve F represents the crosstalk characteristic in the rotary transformer according to the embodiment of Fig. 7. On the other hand, a broken dashed curve G represents the crosstalk characteristic of the conventional rotary transformer of Fig. 15 having a conductive member similar to conductive member 21a shown in Fig. 7 provided therein. It is seen from Fig. 14 that curve F always represents crosstalk lower than the case of curve G, irrespectively of distance D between the magnetic member and the conductive member. More specifically, it is understood that crosstalk can be further reduced not only by provision of conductive member 21a in the rotary transformer, but also by lead lines from one signal transfer coil not crossing any one of other coils simultaneously transferring signals in the wiring groove. In the rotary transformer according to the embodiment of Fig. 7, it is also understood that crosstalk is reduced as distance D between magnetic member 11a and conductive member 21a becomes smaller. It is understood that crosstalk can be stably reduced when distance D between magnetic member 11a and conductive member 21a is 200µm or less, in particular. From the foregoing, it will be understood that crosstalk can be further reduced remarkably by lead lines from one signal transfer coil not crossing any one of other coils simultaneously transferring signals in the wiring groove when distance D between magnetic member 11a and conductive member 21a is 200µm or less. Since crosstalk is stably reduced for distance D of 200µm or less, it is not necessary to precisely control a value of D as long as the relation D ≦ 200µm holds. The rotary transformer is manufactured without difficulty.

Measurement data of the crosstalk characteristics in the cylinder type rotary transformer according to the various embodiments of the present invention are shown in the graphs of Figs. 13 and 14. However, it is needless to say that similarly reduced crosstalk characteristics can also be obtained in the various embodiments of the disc type rotary transformers.

As described above, according to the present invention, crosstalk in a high frequency region caused by electric field coupling due to distributed capacity of a coil can be reduced, because lead lines from one signal transfer coil do not cross any one of other coils simultaneously transferring signals in the wiring groove. According to the present invention, it is not necessary to provide a plurality of small through holes from the coil groove provided on the counter surface of the magnetic member to the surface opposite to the counter surface, in order to avoid lead lines from one signal transfer coil crossing any one of other coils simultaneously transferring signals in the wiring groove. Therefore, it is possible to provide a rotary transformer in which crosstalk is reduced without complicating the manufacturing process of the rotary transformer and without increasing the manufacturing cost of the rotary transformer.

By disposing a conductive member connected to the ground potential in the vicinity of at least one of the rotary magnetic member and the stationary magnetic member in the rotary transformer according to the present invention, it is possible to provide a rotary transformer in which crosstalk is further reduced. In this case, it is not necessary to strictly control the distance between the magnetic member and the conductive member as long as it is kept 200µm or less. Therefore, it is possible to provide a rotary transformer which reduces crosstalk substantially without making the manufacturing process difficult.

Although the present invention has been described and illustrated in detail, it is clearly understood that the same is by way of illustration, the scope of the present invention being determined by the appended claims.

## Claims

1. A rotary transformer comprising a rotary magnetic member (11a), a stationary magnetic member (11b), and two pairs of coils (13a, 13b, 14a, 14b), said two magnetic members (11a, 11b) having respective counter surfaces opposing to each other with a small space (S) interposed therebetween, wherein
each pair of coils is provided at the respective counter surface of the rotary magnetic member (11a) and the stationary magnetic member (11b), and wherein
two pairs of coil grooves (12a, 12b) opposing to each other for receiving the two pairs of coils (13a, 13b, 14a, 14b) on said two counter surfaces are formed, and
wiring grooves (18a, 18b) are formed in the direction crossing said coil grooves (12a,12b) so as to join said coil grooves,
**characterised in that** two pairs of lead lines (13A, 14A) extending from the two coils (13a 14a) on said rotary magnetic member (11a) are drawn in the wiring grooves (18a) in directions away from both the two coils (13a, 14a) and then are routed to the other side opposite to the counter surface of said rotary magnetic member (11a), without causing electric field coupling with any of the coils,
two pairs of lead lines (13B, 14B) extending from the two coils (13b, 14b) on said stationary magnetic member (11b) are drawn in the wiring grooves (18b) in directions away from both the two coils (13b, 14b) and then are routed to the other side opposite to the counter surface of said stationary magnetic member (11b), without causing electric field coupling with any of the coils.

2. The rotary transformer as recited in claim 1, further comprising a conductive member (21a, 21b) provided with a predetermined small distance (D) from a surface opposite to said counter surface with respect to at least one of said two magnetic members (11a, 11b), wherein said conductive member is connected to the ground potential.

3. The rotary transformer as recited in claim 2, wherein said predetermined small distance (D) between said magnetic member (11a, 11b) and said conductive member (21a, 21b) is at least 200µm.

4. The rotary transformer as recited in claim 1, wherein said two magnetic members (11a, 11b) and said two counter surfaces have substantially a cylindrical shape, and a pair of lead lines (13A, 14B) drawn out from one of the coils (13a, 13b, 14a, 14b) disposed in said coil grooves (12a, 12b) on one of said magnetic members (11a, 11b) to one end side of said cylindrical counter surface are extended to the other end side of said cylindrical counter surface along a surface opposite to said counter surface of said one cylindrical magnetic member.

5. The rotary transformer as recited in any one of claim 1 to 4, wherein said two magnetic members (11a, 11b) and said two counter surfaces have substantially a cylindrical shape, and on said rotary magnetic member (11a) the wiring grooves (18a) perpendicularly cross with the coil grooves (13a, 14a) and are disposed symmetrically with respect to the rotation axis of said rotary magnetic member (11a).

## Patentansprüche

1. Rotierender Transformator mit einem rotierenden Magnetelement (11a), einem stationären Magnetelement (11b) und zwei Spulenpaaren (13a, 13b, 14a, 14b), wobei die zwei Magnetelemente (11a, 11b) jeweilige Gegenflächen aufweisen, die einander unter Einhaltung eines kleinen Zwischenraums (S) gegenüberstehen, wobei
- jedes Spulenpaar an der jeweiligen Gegenfläche des rotierenden Magnetelements (11a) und des stationären Magnetelements (11b) vorhanden ist; und wobei
- zwei Paare von Spulennuten (12a, 12b), die einander gegenüberstehen, um die zwei Spulenpaare (13a, 13b, 14a, 14b) aufzunehmen, an den zwei Gegenflächen ausgebildet sind; und
- Leiterbahnnuten (18a, 18b) in der die Spulennuten (12a, 12b) schneidenden Richtung so ausgebildet sind, dass sie mit diesen Spulennuten verbunden sind;
**dadurch gekennzeichnet, dass**
- zwei Paare von Zuleitungen (13A, 14A), die sich ausgehend von den zwei Spulen (13a, 14a) am rotierenden Magnetelement (11a) erstrecken, in den Leiterbahnnuten (18a) in Richtungen weg von beiden Spulen (13a, 14a) verlegt sind, und sie dann zur anderen Seite, entgegengesetzt zur Gegenfläche des rotierenden Magnetelements (11a) geführt sind, ohne elektrische Feldkopplung mit einer dieser Spulen hervorzurufen;
- zwei Paare von Zuleitungen (13B, 14B), die sich ausgehend von den zwei Spulen (13b, 14b) am stationären Magnetelement (11b) erstrecken, in den Leiterbahnnuten (18b) in Richtungen weg von den zwei Spulen (13b, 14b) verlegt sind, und sie dann zur anderen Seite, entgegengesetzt zur Gegenfläche des stationären Magnetelements (11b) geführt sind, ohne elektrische Feldkopplung mit einer der Spulen hervorzurufen.

2. Rotierender Transformator nach Anspruch 1, ferner mit einem leitenden Element (21a, 21b), das mit einem vorbestimmten kleinen Abstand (D) gegen eine Fläche entgegengesetzt zur Gegenfläche in Bezug auf mindestens eines der zwei Magnetelemente (11a, 11b) vorhanden ist, und das mit dem Massepotential verbunden ist.

3. Rotierender Transformator nach Anspruch 2, bei dem der vorgegebene kleine Abstand (D) zwischen dem Magnetelement (11a, 11b) und dem leitenden Element (21a, 21b) mindestens 200 µm beträgt.

4. Rotierender Transformator nach Anspruch 1, bei dem die zwei Magnetelemente (lla, 11b) und die zwei Gegenflächen im Wesentlichen Zylinderform aufweisen, und ein Paar Zuleitungen (13A, 14B) das von einer der in den Spulennuten (12a, 12b) an einem der Magnetelemente (11a, 11b) angeordneten Spulen (13a, 13b, 14a, 14b) zu einer Endseite der zylindrischen Gegenfläche herausgezogen ist, zur anderen Endseite der zylindrischen Gegenfläche entlang einer Fläche erstreckt, die der Gegenfläche des einen zylindrischen Magnetelements entgegengesetzt ist.

5. Rotierender Transformator nach einem der Ansprüche 1 bis 4, bei dem die zwei Magnetelemente (11a, 11b) und die zwei Gegenflächen im Wesentlichen Zylinderform aufweisen und am rotierenden Magnetelement (11a) die Leiterbahnnuten (18a) die Spulennuten (13a, 14a) rechtwinklig schneiden, und sie symmetrisch in Bezug auf die Rotationsachse des rotierenden Magnetelements (11a) angeordnet sind.

## Revendications

1. Transformateur rotatif comprenant un élément magnétique rotatif (11a), un élément magnétique fixe (11b), et deux paires d'enroulements (13a, 13b, 14a, 14b), lesdits deux éléments magnétiques (11a, 11b) possédant des surfaces antagonistes respectives se faisant face mutuellement en ménageant un faible espace (S) entre elles, dans lequel
chaque paire d'enroulements est située au niveau des surfaces antagonistes respectives de l'élément magnétique rotatif (11a) et de l'élément magnétique fixe (11b), et
deux paires de gorges (12a, 12b) se faisant face mutuellement pour recevoir les deux paires d'enroulements (13a, 13b, 14a, 14b) sont formées sur lesdites deux surfaces antagonistes, et
des gorges de câblage (18a, 18b) sont formées dans la direction croisant lesdites gorges pour enroulements (12a, 12b) afin de rejoindre ces dernières,
caractérisé en ce que deux paires de lignes conductrices (13A, 14A) s'étendant à partir des deux enroulements (13a, 14a) situés sur ledit élément magnétique rotatif (11a) sont tirées dans les gorges de câblage (18a) dans des directions opposées aux deux enroulements (13a, 14a), puis acheminées vers le côté opposé à la surface antagoniste dudit élément magnétique rotatif (11a), sans provoquer de couplage de champ électrique avec l'un quelconque des enroulements,
deux paires de lignes conductrices (13B, 14B) s'étendant à partir des deux enroulements (13b, 14b) situés sur ledit élément magnétique fixe (11b) sont insérées dans les gorges de câblage (18b) dans des directions opposées aux deux enroulements (13b, 14b), puis sont acheminées vers le côté opposé à la surface antagoniste dudit élément magnétique fixe (11b), sans provoquer de couplage de champ électrique avec l'un quelconque des enroulements.

2. Transformateur rotatif selon la revendication 1, comprenant en outre un élément conducteur (21a, 21b) situé à une faible distance prédéterminée (D) d'une surface opposée à ladite surface antagoniste, par rapport à l'un au moins desdits deux éléments magnétiques (11a, 11b), ledit élément conducteur étant relié au potentiel de masse.

3. Transformateur rotatif selon la revendication 2, dans lequel ladite faible distance prédéterminée (D) entre ledit élément magnétique (11a, 11b) et ledit élément conducteur (21a, 21b) est d'au moins 200 µm.

4. Transformateur rotatif selon la revendication 1, dans lequel lesdits deux éléments magnétiques (11a, 11b) et lesdites deux surfaces antagonistes ont une forme sensiblement cylindrique, et deux lignes conductrices (13A, 14B) tirées à partir de l'un des enroulements (13a, 13b, 14a, 14b) disposés dans lesdites gorges pour enroulements (12a, 12b) situées sur l'un desdits éléments magnétiques (11a, 11b) jusqu'à l'un des côtés d'extrémité de ladite surface antagoniste cylindrique sont étendues jusqu'à l'autre côté d'extrémité de ladite surface antagoniste cylindrique, le long d'une surface opposée à ladite surface antagoniste dudit élément magnétique cylindrique.

5. Transformateur rotatif selon l'une quelconque des revendications 1 à 4, dans lequel lesdits deux éléments magnétiques (11a, 11b) et lesdites deux surfaces antagonistes ont une forme sensiblement cylindrique, et sur ledit élément magnétique rotatif (11a), les gorges de câblage (18a) croisent perpendiculairement les gorges pour enroulements (13a, 14a) et sont disposées symétriquement par rapport à l'axe de rotation dudit élément magnétique rotatif (11a).
